# EUROPEAN PATENT APPLICATION

(11) **EP 2 611 105 A1**
(43) Date of publication of application: **03.07.2013**
(21) Application number: 12305002.3
(22) Date of filing: 02.01.2012
(51) Int. Cl.: H04L 29/06

(54) **System for provisioning a multimedia asset from a multimedia server to at least one multimedia client and a related method**

(71) Applicant: Alcatel Lucent, 75007 Paris (FR)
(72) Inventor: Lou, Zhe, 2640 Mortsel (BE)
(74) Representative: ALU Antw Patent Attorneys

(57) **Abstract**

The present invention relates to a system for provisioning a multimedia asset from a multimedia server to at least one multimedia client of a plurality of multimedia clients, for rendering the multimedia asset at the, at least one multimedia client. The multimedia server and each multimedia client of the plurality of multimedia clients are coupled over a communications network. The system comprises a capturing part that is adapted to capture a user input at the at least one multimedia client together with a reference to a relevant scene of the multimedia asset that is rendered at the at least one multimedia client and a conversion part that is adapted to convert the user input captured into meta-data for annotating the multimedia asset. The system further comprises a recompiling part that is adapted to recompile the multimedia asset together with the metadata for annotating the multimedia asset at the relevant scene of the multimedia asset to obtain an annotated multimedia asset and an updating part that is able to update/replace said multimedia asset with said annotated multimedia asset.

## Description

The present invention relates to a system for provisioning a multimedia asset from a multimedia server to at least one multimedia client as described in the preamble of claim 1, a related method as described in the preamble of claim 3, a related multimedia client as described in the preamble of claim 4 and a related multimedia server as described in the preamble of claim 6.

Such a system for provisioning an online video, called a multimedia asset, from a multimedia server to at least one multimedia client is well known in the prior-art. Usually, in such a system, a multimedia asset is provisioned from the multimedia server to at least one multimedia client of a plurality of multimedia clients, where such multimedia asset is rendered at, at least one multimedia client of the plurality of multimedia clients. Usually such multimedia server and each multimedia client of multimedia clients are being coupled over a communications network such as the internet.

Nowadays people watch multimedia assets such as online video from YouTube and give some comments afterwards. People are only allowed to give comments as a seperate text, which usually is displayed below the video display. This kind of commenting brings several issues. First of all it doesn't allow users to bring comments to a specific scene at a specific moment. It creates a discontinous experience. Usually users first look at the video and then start to write down some remarks and comments. It might require some iteration to finish their full annotation.

An objective of the present invention is to provide a system, a related method, a multimedia client and a multimedia server of the above known type but wherein a multimedia asset can be annotated by any of the multimedia clients in real time.

According to the invention, this object is achieved by the system as described in claim 1, the method as described in claim 3, the multimedia client as described as described in claim 4 and a multimedia server as described in claim 6,

Indeed, by first capturing a user input at the at least one multimedia client together with a reference to a scene of the multimedia asset currently being rendered at the multimedia client, subsequently converting this captured user input into meta-data for annotating the multimedia asset, recompiling this multimedia asset together with the metadata for annotating the multimedia asset to obtain an annotated multimedia asset and finally replacing the multimedia asset with the annotated multimedia asset, any multimedia client selecting and retrieving the meant multimedia asset after the replacing the multimedia asset with the annotated multimedia asset will obtain the annotated multimedia asset for rendering at the multimedia client. In this way a multimedia asset can be annotated by any of the multimedia clients in real time while annotating the multimedia asset at the right scene and even the meant object or person in a scene of the multimedia asset can be realized.

The Relevant scene is a scene, image or frame of a multimedia asset like an online movie, where users would like to deposit their comments on.

Where the reference to the relevant scene may be a time from the beginning of the multimedia asset, or a frame number of the multimedia asset or any other pointer to a certain scene, image or frame of a multimedia asset.

Rendering a multimedia asset at a multimedia client is the presenting the asset, e.g. the movie on the display of the client and playing sound at the speakers of the client.

For instance if a user wants to comment an actor's speech at a certain moment, it is better to inject the comments right after the actor's speech. Moreover, if we can allow users to put their comments into the scene or in another word allow users to edit the scene with text or media input, it will bring more value to their comments.

This invention presents a solution that permits users to provide their comments to a specific scene at a specific moment and even integrate their comments into the scene of a multimedia asset, like a video . Afterwards, other viewers will be able to watch his comments while this annotated multimdia asset, i.e. the video is playing.

The conversion of the captured user input into meta-data for annotating the multimedia asset may be performed by a tool that maps user input term or words onto standardized metadata vocabulary.

Video metadata have different standard metadata vocabularies, e.g. DCMI, Media RSS, SMIL, OurMedia, etc. The conversion of user inputs into metadata refers to transforming and/or modifying the words or terms defined in the user inputs into one standard term or word of the standard vocabularies. For instance, in the aforementioned example, the convert means changing tag of "text" to "description" if we use DCMI vocabulary standard.

In case the initial user input substantially matches the terms and/or words of the standard metadata vocabularies no conversion is required and hence the user input immediately can be applied as metadata in the step of recompiling the multimedia asset and the metadata for annotating the multimedia asset. In this situation a conversion of user input by means of a conversion part is non essential.

Another characteristic feature of the present invention is described in claim 2.

The user input may comprise a user comment, a relevant scene of the multimedia asset, a relevant location for said comment within the scene of the said multimedia asset,

The user input may include all information to position the comment of a user at the multimedia asset at the right image of the multimedia asset and the correct location in the image for pointing at an object or person included in the multimedia asset and attaching the comment to this object or person. An example of the user input could be

Time: 50 second; Comment: It is a beautiful car; Location: (150, 300)

Time: 58 second; Comment: It is pity that the beautiful car is broken; Location: (350, 200) where respectively 50 and 58 seconds uniquely identifies the frame that is to be annotated and the respective location (150, 300) and (350, 200) form the coordinates in the frame whereto the respective comments are to be placed or point to.

Another characteristic feature of the present invention is described in claim 5 and claim 7.

In case the initial user input does not substantially match the terms and/or words of the standard metadata vocabularies the conversion of user input into metadata is required.

Either the multimedia client or the Multimedia server requires, a conversion part COP that is adapted to convert the user input captured into meta-data for annotating the multimedia asset where the metadata consists of words and/or terms that match the standard metadata vocabularies.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
FIG. 1 represents a functional representation of the system for provisioning a multimedia asset from a multimedia server MS to at least one multimedia client MC1 of a plurality of multimedia clients MC1... "MCx, wherein the implementation of the present invention is realized.
FIG. 2 represents the functional representation of the multimedia exchange server MS in the multimedia exchange system according to the present invention applying a first embodiment of the present invention.

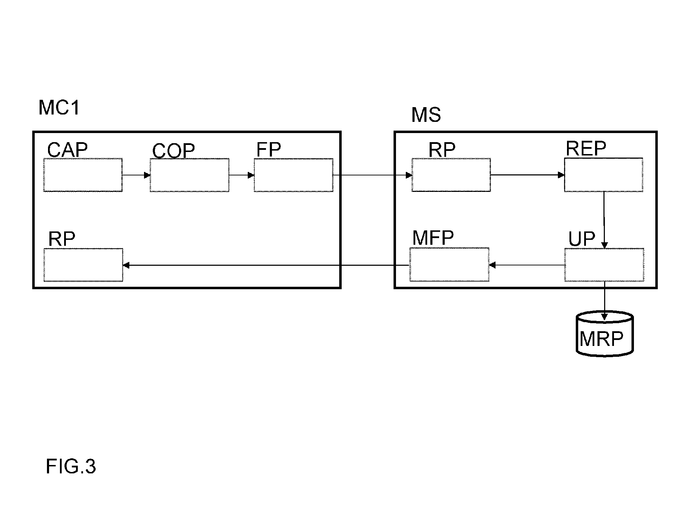

FIG. 3 represents the functional representation of the multimedia exchange server MS in the multimedia exchange system according to the present invention applying a second embodiment of the present invention.

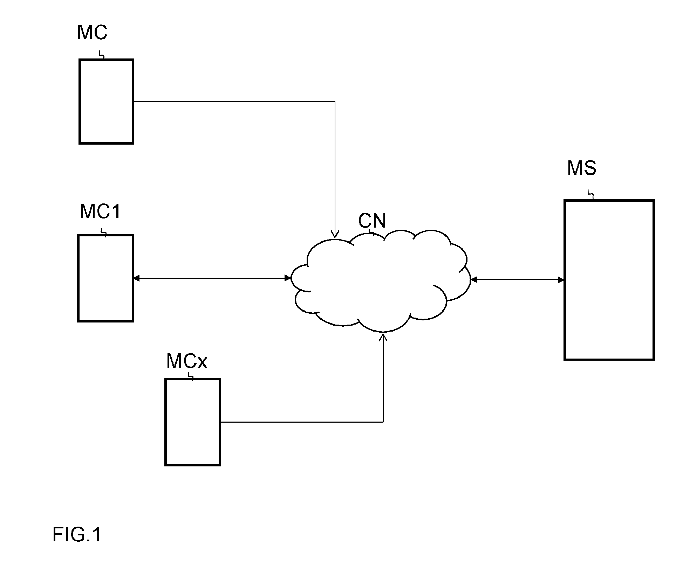

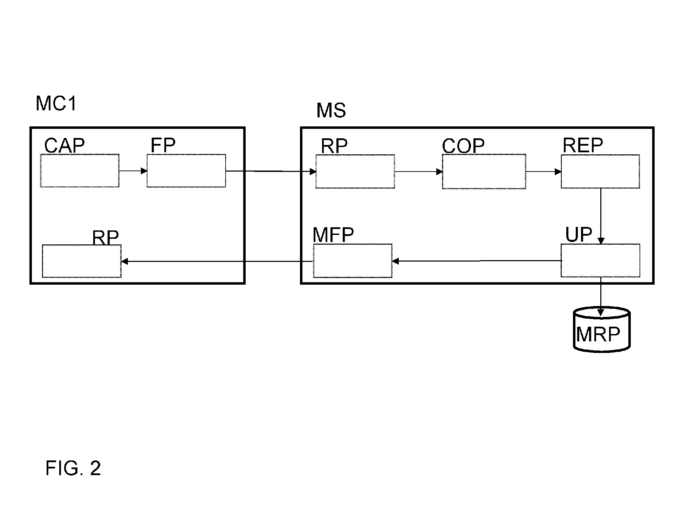

In the following paragraphs, referring to the drawings, a first implementation of the method and the related devices according to the present invention will be described. In the first paragraph of this description the main elements of this network as presented in FIG. 1 and FIG.2 are described. In the second paragraph, all connections between the before mentioned network elements and described means are defined. In the succeeding paragraph the actual execution of the method for provisioning multimedia exchange is described.

First essential elements of the present invention is a multimedia server MS for provisioning a multimedia asset to at least one multimedia client MC1 of a plurality of multimedia clients MC1,..,MCx, this server comprising a multimedia repository or being coupled to such multimedia repository that may hold multimedia assets like movies.

Further essential elements are one or more multimedia clients MC1,..,MCx, each being able to render the multimedia asset provisioned by the multimedia server MS. Such client in this embodiment being a computer with keyboard mouse and coupled display like a fixed desktop PC, a laptop a mobile phone or an IPTV installation having coupled display and input selection device like keyboard or a remote control etc. Such multimedia client is a user device having internet access capabilities like Browsers (e.g. Internet Explorer, Firefox, Opera, Chrome, etc.) and Media players (e.g. VLC, Window Media player, Quick Time, etc.)

The multimedia server MS and each multimedia client of multimedia clients MC1,.., MCx, are coupled over a communications network CN,

Each of the multimedia clients MC1, .., MCx are coupled to the multimedia server MS over communications network CN including a Digital subscriber Line access network or a cable network or any other suitable access network, a core internet network and a further access network on the side of the multimedia exchange server. Alternatively each of the multimedia clients are coupled to the multimedia exchange server MS over any mobile or fixed connections such as WiFi, Bluetooth, LTE, GPON, FTTH, FTTP, etc.

In a first embodiment, the multimedia client MC1 comprises a capturing part CAP that is adapted to capture a user input at the multimedia client MC1 together with a reference to a relevant scene of the multimedia asset and a forwarding part FP that is able to forward a user input captured at the multimedia client MC1 together with the reference to the relevant scene of the multimedia asset rendered at said at least one multimedia client, to the multimedia server MS. The multimedia client MC1 further comprises a rendering part RP that is able to render the multimedia asset forwarded by the multimedia server MS at the display included in the multimedia client or coupled to the multimedia client MC1.

In a second embodiment, the multimedia client MC1 further comprises between the capturing part CAP and the forwarding part FP, a conversion part COP that is adapted to convert the user input that is captured by the capturing part into meta-data for annotating the multimedia asset. In this second embodiment the forwarding part FP instead is adapted to forward the meta-data for annotating the multimedia asset.

The capturing part CAP has an input-terminal that is at the same time an input-terminal of the multimedia client MC1 and further is coupled with an output to an input of the forwarding part FP that further owns an output-terminal that is at the same time an output-terminal of the multimedia client MC1. The rendering part RP of the multimedia client MC1 further owns an input-terminal that is at the same time an input-terminal of the multimedia client MC1 and an output-terminal that is at the same time an output-terminal of the multimedia client MC1.

In the second embodiment, the multimedia client MC1 further comprises a conversion part that is coupled between the capturing part CP and the forwarding part FP.

It is to be noted that each multimedia client of the plurality of multimedia clients MC1,..,MCx, possesses the same functional structure as multimedia client MC1 as described before.

In the first embodiment the Multimedia server MS comprises a Receiving part RP, that is adapted to receive meta-data for annotating the multimedia asset currently rendered, a conversion part COP that is able to convert the user input captured into meta-data for annotating the multimedia asset and comprises a recompiling part REP that is able to recompile the multimedia asset together with the metadata for annotating the multimedia asset at the relevant part of said multimedia asset to obtain an annotated multimedia asset. The multimedia server MS further comprises an additional updating part UP that is adapted to replace the multimedia asset with the annotated multimedia asset and a multimedia forwarding part that is able to forward a multimedia asset to a multimedia client MC1 for rendering such multimedia asset at the multimedia client.

Additionally the media server MS comprises a multimedia repository MRP that is able to maintain, store and update multimedia assets.

In a second embodiment, the Receiving part RP of the Multimedia server MS is adapted to receive metadata for annotating the multimedia asset as the user input captured is converted into meta-data for annotating the multimedia asset at the multimedia client MC1.

The receiving part RP has an input-terminal that is at the same time an input-terminal of the multimedia server MS and further is coupled with an output to an input of the conversion part COP that further is coupled to the recompiling part REP. The recompiling part REP further is coupled to the additional updating part UP that in turn is coupled to a multimedia repository MRP and to the media forwarding Part MFP. The media forwarding Part MFP further owns an output-terminal that is at the same time an output-terminal of the multimedia server MS.

In a second embodiment the receiving part RP is coupled with an output to an input that further is coupled to the recompiling part REP.

In order to explain the present invention it is assumed that a first user, i.e. the user of the multimedia client MC1 is watching a multimedia asset, i.e. an online YouTube movie at his personal computer or IPTV system. The media forwarding part MFP, at request has retrieved the YouTube movie from the YouTube repository and forwards the movie, by means of streaming towards, the rendering part of the multimedia client MC1. The rendering part RP then handles the presentation of the movie at the coupled display of the multimedia client MC1.

This first user feels to add comments to the currently rendered YouTube movie.

For instance when the first user sees an certain object or person for which he would like to add a comment, he stops the playing of the movie by clicking the mouse hence at the scene he wants to add the comment, he deposits his comments by typing a phrase by means of the coupled keyboard and subsequently positions the comment in the selected scene at the right location in the scene, using the coupled mouse , by indicating e.g., location with coordinates "IocationX" value="100", "locationY" value="200", of the image of the movie e.g. located at 50 seconds from the beginning of the movie (i.e. the location within in the "This is amazing! Is it real?" on the scene where the object or person appears. The comment may include the following data in order to described the comment to be positioned in the YouTube movie: "useridentification " value="Joe" , "time" value="50s", "text" value="This is amazing! Is it real?", "font" value="FuturaA Bk BT", "size" value="10", "locationX" value="100", "locationY" value="200" where "useridentification " idenfies the the identification of the annotating user being Joe, where "time" indicates the time distance of the annotated scene from the start of the movie , where "text" indicates the content of the comment, e.g. being "This is amazing! Is it real?", where "font" value indicates the type of font used in the comment, here being "FuturaA Bk BT", where the "size" value="10" indicates the size of the font of the comment and "locationX" value and "locationY" value= respectively indicates the location on the X axis (horizontal axis) e.g. 100 and location on the Y-axis (vertical axis) e.g. being 200 in the meant scene.

All this data is forwarded, by means of the forwarding part FP, to the receiving part RP of the media server MS. The "comments data" forwarded alternatively, may first be converted into an XML file which then is forwarded towards the media server MS.

Subsequently this comments data is received at the receiving part of the media server MS as unconverted data or in form of an XML file. The comments data is forwarded to the a conversion part COP that subsequently converts the comments data being the user input captured into meta-data for annotating said multimedia asset. Note that in case comments data (user inputs captured) are conveyed using an XML-file, this comments data first needs to be retrieved from the XML-file.

Video metadata have different standard vocabularies, e.g. DCMI, Media RSS, SMIL, OurMedia, etc. The converting of user inputs into metadata refers to transforming and or modifying the words/terms defined in the user inputs into one of the standard vocabularies. For instance, in the aforementioned example, the convert means changing tag of "text" to "description" if we use DCMI vocabulary standard.

Subsequently, the recompiling part REP recompiles the multimedia asset together with the metadata for annotating the multimedia asset, i.e. the YouTube movie, at the relevant scene of said multimedia asset to obtain an annotated multimedia asset, i.e. an annotated YouTube Movie. The updating part UP/ then uses the annotated multimedia asset, i.e. an annotated YouTube Movie for updating the multimedia repository MRP by replacing the original and first rendered YouTube with the annotated multimedia asset, i.e. the annotated YouTube Movie..

The next user, e.g. the user of multimedia client MC2 desiring to view the multimedia asset Z, i.e. the YouTube movie Z, requesting the multimedia server MS to forward the newly annotated version is, at this request of this user retrieved by the managing part MP of the multimedia server MS. The multimedia forwarding part MFP, subsequently forwards the annotated version of YouTube video Z towards the multimedia client MC2 that receives the movie and by means of the rendering part present the annotated movie Z at the coupled display of the multimedia client MC2

In the second embodiment the conversion of the user input captured into Meta data for annotating the multimedia asset Z alternatively is performed at the multimedia client MC1. In this embodiment the metadata for annotating the multimedia asset Z is forwarded, by means of the forwarding part FP1, wand the metadata is received at the multimedia server MS by the receiving part RP1 which metadata can be applied immediately for annotating the originally rendered multimedia asset Z, i.e. YouTube video Z.

It is to be noted that although the aforementioned text only describes the textual comments, this invented solution could allow users to provide multimedia input as well implying that the multimedia asset also can be annotated with a further multimedia asset.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. System for provisioning a multimedia asset from a multimedia server (MS) to at least one multimedia client (MC1) of a plurality of multimedia clients (MC1,..MCx), for rendering said multimedia asset at said at least one multimedia client (MC), said multimedia server (MS) and each multimedia client of a plurality of multimedia clients (MC1,.., MCx), being coupled over a communications network (CN), **CHARACTERISED IN THAT** said system comprises:
a. a capturing part (CAP), adapted to capture a user input at said at least one multimedia client (MC1) together with a reference to a relevant scene of said multimedia asset rendered at said at least one multimedia client (MC1); and
b. a conversion part (COP), adapted to convert said user input captured into meta-data for annotating said multimedia asset; and
c. a recompiling part (REP) adapted to recompile said multimedia asset together with said metadata for annotating said multimedia asset at said relevant scene of said multimedia asset to obtain an annotated multimedia asset; and
d. an updating part (UP), adapted to replace said multimedia asset with said annotated multimedia asset.

2. System for provisioning a multimedia asset according to claim 1, **CHARACTERISED IN THAT** said user input may comprise a user comment, a relevant scene of said multimedia asset, a relevant location of said comment within said scene of said multimedia asset.

3. Method for provisioning a multimedia asset from a multimedia server (MS) to at least one multimedia client (MC1) of a plurality of multimedia clients (MC1,.., MCx), for rendering said multimedia asset at said at least one multimedia client (MC), said multimedia server (MS) and each multimedia client of multimedia clients (MC1,.., MCx), being coupled over a communications network (CN), **CHARACTERISED IN THAT** said method further comprises the steps of:
a. capturing a user input at said at least one multimedia client (MC1) together with a reference to a relevant scene of said multimedia asset; and
b. converting said user input into meta-data for annotating said multimedia asset; and
c. recompiling said multimedia asset together with said metadata for annotating said multimedia asset to obtain an annotated multimedia asset; and
d. replacing said multimedia asset with said annotated multimedia asset.

4. A multimedia client (MC1), for use in a system for provisioning a multimedia asset from a multimedia server (MS) to said multimedia client (MC1), said system comprising a plurality of multimedia clients (MC1,.,MCx), for rendering said multimedia asset at, at least one multimedia client (MC) of said plurality of multimedia clients (MC1,..,MCx), said multimedia server (MS) and each multimedia client of said plurality of multimedia clients (MC1,..,MCx), being coupled over a communications network (CN), **CHARACTERISED IN THAT** said multimedia client (MC1) comprises:
a. a capturing part (CAP), adapted to capture a user input at said at least one multimedia client (MC1) together with a reference to a relevant scene of said multimedia asset; and
b. a forwarding part (FP), adapted to forward a user input captured at said at least one multimedia client (MC1) together with said reference to said relevant scene" of said multimedia asset to said multimedia server (MS).

5. A multimedia client (MC1) according to claim 4, **CHARACTERISED IN THAT** said multimedia client (MC1) further comprises between said capturing part (CP) and said forwarding part (FP) a conversion part (COP), adapted to convert said user input captured into meta-data for annotating said multimedia asset; and **in that** said forwarding part (FP) is adapted to forward said meta-data for annotating said multimedia asset.

6. Multimedia server (MS) for use in a system for provisioning a multimedia asset from said multimedia server (MS) to at least one multimedia client (MC1) of a plurality of multimedia clients (MC1,..MCx), said system comprising a plurality of multimedia clients (MC1,..MCx), for rendering said multimedia asset at said , at least one multimedia client (MC) of said plurality of multimedia clients (MC1,..,MCx), said multimedia server (MS) and each multimedia client of said plurality of multimedia clients (MC1,..,MCx), being coupled over a communications network (CN), **CHARACTERISED IN THAT** said multimedia server (MS) comprises:
a. Receiving part (RP), adapted to receive meta-data for annotating said multimedia asset; and
b. a recompiling part (REP) adapted to recompile said multimedia asset together with said metadata for annotating said multimedia asset at said relevant scene of said multimedia asset to obtain an annotated multimedia asset; and
c. an updating part (UP), adapted to replace said multimedia asset with said annotated multimedia asset.

7. Multimedia server (MS) according to claim 6, **CHARACTERISED IN THAT** said Receiving part (RP) is adapted to receive a user input captured at said at least one multimedia client (MC1) together with a reference to a relevant scene of said multimedia asset; and **in that** said Multimedia server (MS) further comprises between said receiving part (RP) and said recompiling part (REP), a conversion part (COP), adapted to convert said user input captured into meta-data for annotating said multimedia asset.
